# EUROPÄISCHE PATENTSCHRIFT

(11) **EP 0 538 263 B1**
(45) Veröffentlichungstag und Bekanntmachung des Hinweises auf die Patenterteilung: **28.06.1995**
(21) Anmeldenummer: 91908422.8
(22) Anmeldetag: 27.04.1991
(51) Int. Cl.: F16J 1/14, F16J 1/16, F16C 7/00

(54) **GELENKVERBINDUNG ZWISCHEN KOLBEN UND PLEUEL EINES VERBRENNUNGSMOTORS**
ARTICULATED JOINT BETWEEN THE PISTON AND CONNECTING ROD OF AN INTERNAL COMBUSTION ENGINE
ASSEMBLAGE A ROTULE ENTRE LE PISTON ET LA BIELLE D'UN MOTEUR A COMBUSTION INTERNE

(30) Priorität: 07.07.1990 DE 4021703
(43) Veröffentlichungstag der Anmeldung: 28.04.1993
(73) Patentinhaber: Mahle GmbH, 70376 Stuttgart (DE)
(72) Erfinder: REIN, Wolfgang, D-7302 Ostfildern 3 (DE)
(86) Internationale Anmeldenummer: DE9100363
(87) Internationale Veröffentlichungsnummer: WO9201177

(56) Entgegenhaltungen:
- DE-A- 1 476 059
- DE-B- 1 029 636
- GB-A- 244 829
- US-A- 1 936 158

## Beschreibung

Die Erfindung betrifft eine Gelenkverbindung zwischen Kolben und Pleuel eines Verbrennungsmotors nach dem Oberbegriff des Patentanspruchs 1.

Derartige Gelenkverbindungen sind aus der DE-A- 14 76 059 bekannt.

Der Erfindung liegt die Aufgabe zugrunde, diese bekannte Gelenkverbindung noch kompakter auszubilden.

Gelöst wird diese Aufgabe durch eine Ausgestaltung nach dem kennzeichnenden Merkmal des Patentanspruchs 1.

Eine zweckmäßige Ausgestaltung ist Gegenstand des Anspruchs 2.

Die kompaktere Bauweise wird dadurch erreicht, daß die Lagerfläche des Pleuelkopfes in dem Bereich, in dem die von der Verbrennung stammenden Kräfte durch den Kolbenbolzen übertragen werden, zu Lasten der in diesem Bereich vorhandenen Lagerfläche der Kolbennabe vergrößert wird. Denn die Kolbennabe hat in diesem Bereich lediglich die sich aus der oszilierenden Bewegung des Kolbens ergebenden Massenkräfte aufzunehmen. Daher kann die Nabe in diesem Bereich mit einer radialen zentralen Ausnehmung versehen sein, in die eine zusätzliche Lagerfläche des Pleuels an den Bolzen herangeführt werden kann.

Ein Ausführungsbeispiel der Erfindung ist in der Zeichnung dargestellt.

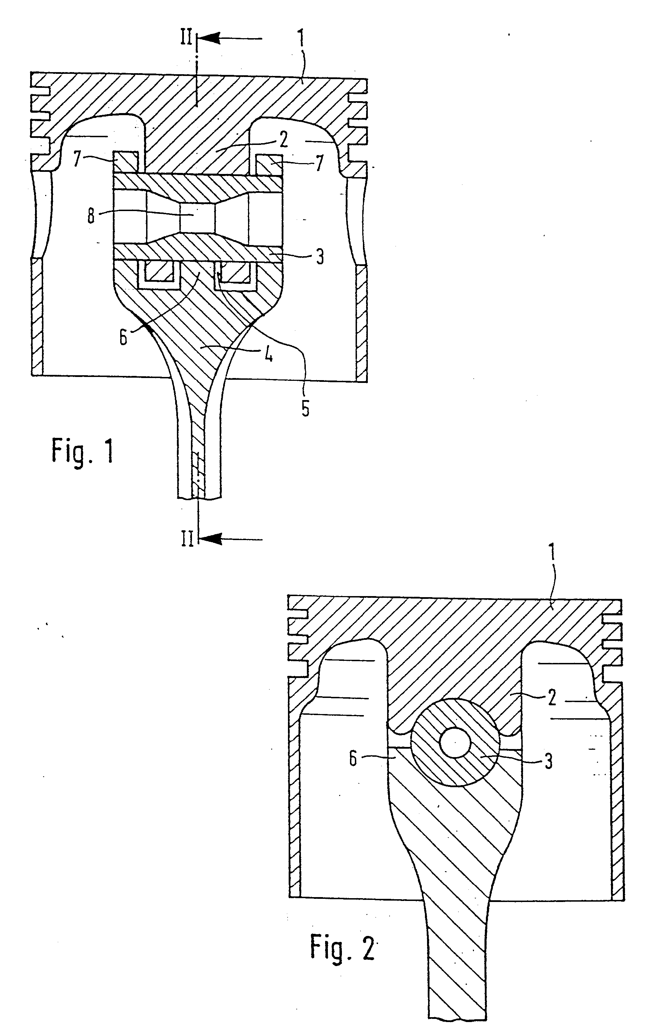

Es zeigen
- Fig. 1: einen Längsschnitt durch den Kolben
- Fig. 2: einen Schnitt durch den Kolben nach Linie II - II

An den Boden des Kolbens 1 ist eine zentrale Nabe 2 mit einer Bohrung zur Aufnahme des Kolbenbolzens 3 angeformt.

An den Kolbenbolzen 3 angelenkt ist ein Pleuel 4 mit einem gabelartig ausgebildeten Kopf.

In einem dem Kopf des Pleuels 4 zugewandten Umfangsbereich ist die Nabe 2 mit einer radialen Ausnehmung 5 versehen. In diese Ausnehmung 5 ragt ein an den Pleuelkopf angeformtes stegartiges Lager 6. Dieses Lager 6 dient zur zusätzlichen Aufnahme der von der Verbrennung ausgehenden Kräfte im Pleuelkopf. Durch diese zusätzlich im Zentrum des Pleuelkopfes geschaffene Lagerfläche kann der Pleuelkopf insgesamt in Richtung des Kolbenbolzens schmaler ausgeführt werden. Ferner erhält der Kolbenbolzen 3 durch diese Lagerfläche 6 eine zusätzliche Abstützung, wodurch er weniger auf Biegung belastet wird.

Zu seiner axialen Mitte hin kann der hohl ausgebildete Kolbenbolzen 3 einen abnehmenden Bohrungsdurchmesser aufweisen. In dem axial mittleren Bereich 8 mit dem kleinsten Bohrungsdurchmesser kann der Kolbenbolzen 3 auch massiv ausgebildet sein.

In Richtung seiner Achse kann der Kolbenbolzen durch einen Schrumpfsitz innerhalb der Wangen des Pleuel (4)-Kopfes gesichert sein.

Möglich ist jedoch auch eine seitliche Kolbenbolzensicherung durch Sprengringe, die entweder in außen über den Pleuel (4)-Kopf hinausragende Abschnitte des Kolbenbolzens oder in den Bereich zwischen Nabe und Wangen 7 des Pleuel (4)-Kopfes in dort vorgesehene Umfangsrillen einbringbar sind. Beispiele für diese Sicherungsarten sind in der DE-A- 14 76 059 und US-A- 29 13 292 ausführlich beschrieben.

## Patentansprüche

1. Gelenkverbindung zwischen Kolben (1) und Pleuel (4) eines Verbrennungsmotors, bei der ein gabelartig geformter Kopf des Pleuels (4) eine zentral von dem Kolbenboden ausgehende Nabe (2) in Richtung senkrecht zur Kolbenlängsachse umfaßt und einen in der Nabe (2) gelagerten Kolbenbolzen (3) aufnimmt, wobei der Kolbenbolzen (3) zumindest in einem der ihn aufnehmenden Teile drehbar ist,
dadurch **gekennzeichnet,**
daß die Nabe (2) in ihrem dem Pleuel (4)-Kopf zugewandten Umfangsbereich mit einer radialen Ausnehmung (5) versehen ist, in die ein an dem Kolbenbolzen (3) angreifender Lagersteg (6) des Pleuel(4)-Kopfes ragt.

2. Gelenkverbindung nach Anspruch 1,
dadurch **gekennzeichnet,**
daß der Kolbenbolzen (3) ein Hohlbolzen ist, dessen Innenbohrungsdurchmesser zur axialen Mitte hin abnimmt bzw. dessen Innenbohrung im Bereich der axialen Mitte ganz unterbrochen ist.

## Claims

1. Hinge joint between piston (1) and connecting rod (4) of an internal combustion engine, whereby a fork-shaped small end of connecting rod (4) encloses a hub (2) having its root at the centre of the piston crown in a direction perpendicular to the longitudinal axis of the piston and accommodates a gudgeon pin (3) located in the hub (2), whereby the gudgeon pin (3) can rotate in at least one of the parts that accommodates it,
with the distinguishing feature
that the hub (2) has a radial recess (5) in its perimeter area facing the small end of connecting rod (4) into which a bearing web (6) of the small end of connecting rod (4), which acts upon the gudgeon pin (3), extends.

2. Hinge joint according to claim 1,
with the distinguishing feature
that gudgeon pin (3) is a hollow pin whose inside bore diameter diminishes towards the axial centre or whose inside bore is entirely interrupted at the axial centre.

## Revendications

1. Liaison articulée entre piston (1) et bielle (4) d'un moteur à combustion interne dans laquelle une tête de la bielle (4) en forme de fourche enserre, dans le sens vertical par rapport à l'axe longitudinal du piston, un moyeu (2) partant du centre du fond de piston et supporte un axe de piston (3) s'appuyant dans le moyeu (2), l'axe de piston (3) pouvant tourner dans au moins une des pièces qui le supporte, caractérisée par le fait que le moyeu (2) est pourvu, dans sa zone périphérique tournée vers la tête du piston (4), d'un évidement radial (5) dans lequel pénètre une nervure d'appui (6) de la tête de piston (4) mordant sur l'axe de piston (3).

2. Liaison articulée selon la revendication 1, caractérisée par le fait que l'axe du piston (3) est un axe creux dont le diamètre d'alésage intérieur diminue vers le milieu axial ou dont l'alésage intérieur est interrompu dans la zone du milieu axial.
